# EUROPÄISCHE PATENTSCHRIFT

(11) **EP 1 646 804 B1**
(45) Veröffentlichungstag und Bekanntmachung des Hinweises auf die Patenterteilung: **24.02.2010**
(21) Anmeldenummer: 04741210.1
(22) Anmeldetag: 22.07.2004
(51) Int. Cl.: F16F 7/09, F16F 9/02

(54) **LUFTDÄMPFER**
AIR DAMPER
AMORTISSEUR A AIR

(30) Priorität: 22.07.2003 DE 20311217 U
(43) Veröffentlichungstag der Anmeldung: 19.04.2006
(73) Patentinhaber: Vauth-Sagel Holding GmbH & Co. KG, 33034 Brakel (DE)
(72) Erfinder: SAGEL, Thomas, 33034 Brakel (DE)
(74) Vertreter: Hanewinkel, Lorenz
(86) Internationale Anmeldenummer: PCT/EP2004/008180
(87) Internationale Veröffentlichungsnummer: WO 2005/010395

(56) Entgegenhaltungen:
- EP-A- 1 211 375
- WO-A-03/100287
- WO-A-2004/085871
- DE-A- 3 016 915
- FR-A- 1 111 735
- "SHOCK ABSORBER WITH ADDITIONAL BREAK EFFECT" IBM TECHNICAL DISCLOSURE BULLETIN, IBM CORP. NEW YORK, US, Bd. 37, Nr. 7, 1. Juli 1994 (1994-07-01), Seite 143, XP000455466 ISSN: 0018-8689

## Beschreibung

Die Erfindung betrifft einen Luftdämpfer mit einem Zylinderkörper, in dem ein endseitig an einer Kolbenstange befindlicher Kolben zwischen einem den Zylinderkörper verschließenden Deckel und einem Bodenteil gleitend geführt ist, wobei durch den, einen wandungsseitig anliegenden Dichtungsring aufweisender Kolben eine im Zylinderraum befindliche Luft komprimiert wird und damit die in Einschubrichtung zum Bodenteil hin bewegte Kolbenstange eine Dämpfung erfährt.

Derartige Luftdämpfer sind beispielsweise aus der Gebrauchsmusteranmeldung DE 202 20 284 U1 bekannt. Der dort gezeigte Kolben mit einem darauf verschieblichen, spreizbaren Reibelement ist kompliziert und aus vielen Teilen aufgebaut, die präzise verarbeitet sein müssen. Das Reibelement wird über die Anschläge von miteinander verhakten Teilen des Kolbens zusammengepresst.
Auch aus der Patentschrift DE 101 27 429 C1 ist ein Luftdämpfer bekannt, der ein spreizbares Reibungselement aufweist. Durch zusätzliche Keilflächen zwischen zwei Kolbenteilen wird hier das Reibelement aufgedehnt. Auch dieser Luftdämpfer ist kompliziert und aus vielen Teilen aufgebaut.
Weiterhin ist aus der Patentschrift EP 1 211 375 A2 ein Dämpfungselement bekannt, bei dem sich eine verschiebliche Gleitdichtung auf dem Schaft des Kolbens verschiebt und damit einen luftdurchlässigen Spalt verschließt oder öffnet. Diese Gleitdichtung bremst nicht durch Reibung an der Zylinderinnenwand.
In dem IBM Technical Disclosure Bulletin, Bd. 37, Nr.7, 1994, ist ein Dämpfungselement beschrieben, das einen aufwölbbaren Bremskörper enthält. Dieser ist aber als separates Teil ausgeführt und verschließt einen Luftkanal an der Rückseite des Bremskörpers.

Es ist Aufgabe der Erfindung, einen Luftdämpfer anzugeben, der ein fest verbundenes Reibungselement aufweist und sehr einfach und preiswert herzustellen ist.

Diese Aufgabe wird durch die Merkmale des Anspruchs 1 gelöst.

Vorteilhafte Ausgestaltungen der Erfindung sind in den Unteransprüchen angegeben.

Der erfindungsgemäße Luftdämpfer besitzt einen Kolben mit zwei dämpfenden Elementen. Zum einen ist in einer radialen Nut ein Dichtungsring mit einer Dichtlippe eingelegt, der beim Zusammendrücken des Luftdämpfers die Kammer mit dem Luftvolumen abdichtet und beim Auseinanderfahren des Luftdämpfers Luft in die Kammer nachströmen lässt. Dadurch baut sich nur beim Zusammendrücken in der Kammer ein Überdruck durch die komprimierte Luft auf. Dieser Überdruck dient zum zweiten dazu den in dem Kolben integrierten Bremskörper aus gummiartigen Material aufzuwölben und gegen die Zylinderinnenwand zu drücken. Der Schluss zwischen dem Bremskörper und der Zylinderinnenwand dient als Reibelement, das Energie vernichtet und die Bewegung des Kolbens weiter bremst Der Kolben ist zur Kammer hin zylinderförmig geöffnet, so dass der Überdruck an der Innenwand des Bremskörpers diesen aufwölbt. Der Bremskörper ist mittels Zwei-Komponenten-Spritzverfahren hergestellt, so dass nur ein einstückiger Kolben vorhanden ist.

An dem Kolben ist axial eine Kerbe angebracht, die Luft vorbeiströmen lässt und damit den Überdruck in der Kammer definiert begrenzt. Die Kerbe führt unter dem Dichtungsring hindurch und über den Bremskörper hinweg. Die Kerbe ist V-förmig gestaltet und wird durch den Dichtungsring und den aufgewölbten Bremskörper nicht abgedichtet.

Vorteilhafterweise drückt im unbelasteten Zustand eine in der Kammer zwischen Boden und Kolben angeordnete Feder den Kolben aus dem Zylinder heraus.

Der Luftdämpfer lässt sich dadurch einfach in Möbelbeschläge oder dergleichen einfügen, dass an dem Zylinder Rasthaken angeordnet sind, die sich in entsprechende Öffnungen des aufnehmenden Beschlags einrasten lassen. Werkzeug ist für die Montage eines solchen Luftdämpfers nicht erforderlich.

Am äußeren Ende der Kolbenstange ist günstigerweise ein Anschlag aufgeklipst, der sich einfach an wechselnde Anforderungen anpassen lässt.

Um die erforderliche Elastizität zu erreichen, ist der Bremskörper beispielsweise aus Silikon gespritzt, wodurch auch die gewünschte Reibung und Elastizität erreicht wird.

Der Zylinder und der Kolben sind aus Kunststoff gespritzt. So lässt sich der Luftdämpfer preiswert mit den geforderten Materialeigenschaften herstellen.

In einer weiteren vorteilhaften Ausfdhrungsform ist in den Bremskörper ein Haltering eingefügt, der den Anschlag für den Dichtring bildet. In dieser Ausführungsform besitzt der Kolben keinen vorderen Teil, der zusätzlich angespritzt werden müsste.

Um beim Bremsvorgang einen definierten Luftauslass aus der Kolbenkammer zu gewährleisten, ist in der Anlagefläche des Dichtrings an den Kolben oder den Haltering eine Kerbe eingearbeitet, durch die die Luft an dem Dichtring vorbeiströmen kann. Diese Kerbe setzt sich auf dem Bremskörper fort.

Eine vorteilhafte Ausführung der Erfindung ist beispielhaft in den Figuren beschrieben.
Fig. 1 zeigt einen Schnitt durch einen Luftdämpfer
Fig. 2 zeigt perspektivisch den Kolben im Detail
Fig. 3 zeigt eine Perspektive von dem Kolben mit dem Zylinder
Fig. 4 zeigt einen Schnitt durch einen Luftdämpfer mit Dichtring im Bremskörper

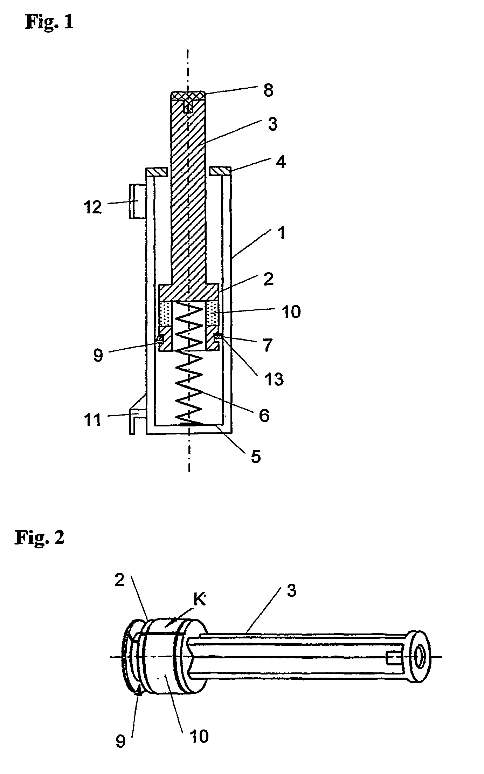

In Fig. 1 ist der Zylinder 1 mit dem Kolben 2 und der Kolbenstange 3 im Schnitt dargestellt. Der Kolben besitzt den ringförmig im Zwei-Komponenten-Spritzverfahren eingefügten Bremskörper 10, der sich bei Überdruck in der Kammer 13 nach außen an die Innenwand des Zylinders 12 wölbt. In der Nut 9 befindet sich der Dichtungsring 7, mit seiner Dichtlippe die Kammer 13 verschließt. Die Feder 6 zwischen dem Boden 5 und dem Kolben 2 drückt den unbelasteten Kolben 2 und damit auch die Kolbenstange 3 mit dem Anschlag 8 nach außen. Der Zylinder ist mit dem Deckel 4 abgeschlossen, der auch die Kolbenstange 3 axial führt. Der Luftdämpfer kann über die Rasthaken 11 und 12 in einen Beschlag eingeklipst werden. Dabei nimmt der Haken 11 die meisten Druckkräfte auf.

In Fig. 2 ist perspektivisch der Kolben 2 mit der Kolbenstange 3 dargestellt. Der Kolben 2 besitzt die Nut 9, in welche die hier nicht gezeigte Dichtlippe eingesetzt wird. Im Kolben 2 befindet sich der eingespritzte Bremskörper 10. Am äußeren Rand des Kolbens 2 verläuft axial die Kerbe K, die einen definierten Luftdurchlass darstellt und einen zu großen Druck im Zylinder verhindert. Die Kerbe K läuft in der Nut 9 unter dem Dichtring her, so dass sie nicht mit abgedichtet wird. Auch auf dem Bremskörper 10 ist die Kerbe K so tief, dass sie bei der Aufwölbung nicht verschlossen wird. Somit ist der definierte Luftdurchlass über die Kerbe K sichergestellt.

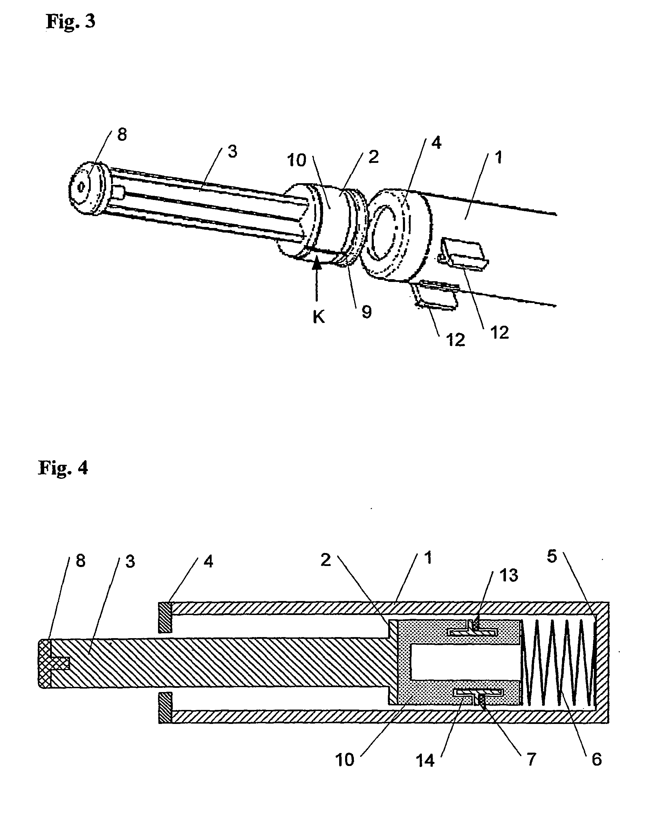

In Fig. 3 ist der Zylinder 1 und der Kolben 2 auseinandergenommen perspektivisch dargestellt. Der Kolben 2 besitzt die Kolbenstange 3 mit dem auswechselbaren Anschlag 8. Auch hier ist die Kerbe K auf dem Kolben 2 gezeigt, die durch die Nut 9 und über den Bremskörper 10 axial verläuft. Der Zylinder 1 ist durch den Deckel 4 verschlossen, der ein Loch zur Führung der Kobenstange 3 aufweist. Am Zylinder 1 sind die Rasthaken 11 angespritzt, über welche der Zylinder in einen Beschlag eingehakt wird.

In Fig. 4 ist der Zylinder 1 mit dem Kolben 2 und der Kolbenstange 3 im Schnitt dargestellt. Der Kolben besitzt den ringförmig im Zwei-Komponenten-Spritzverfahren angefügten Bremskörper 10, der sich bei Überdruck in der Kammer 13 nach außen an die Innenwand des Zylinders 12 wölbt. Im Bremskörper 10 befindet sich ein Haltering 14 mit dem Dichtungsring 7, mit seiner Dichtlippe die Kammer 13 verschließt. Am Haltering 14 ist an der Anlagefläche für den Dichtring 7 eine Kerbe vorhanden, die für einen definierten Luftdurchlass sorgt.
Die Feder 6 zwischen dem Boden 5 und dem Kolben 2 drückt den unbelasteten Kolben 2 und damit auch die Kolbenstange 3 mit dem Anschlag 8 nach außen. Der Zylinder ist mit dem Deckel 4 abgeschlossen, der auch die Kolbenstange 3 axial führt.

## Patentansprüche

1. Luftdämpfer mit einem Zylinderkörper (1), in dem ein endseitig an einer Kolbenstange (3) befindlicher Kolben (2) zwischen einem den Zylinderkörper verschließenden Deckel (4) und einem Bodenteil (5) gleitend geführt ist, wobei der Kolben (2) in einer Nut (9) einen wandungsseitig anliegenden einseitig wirkenden Dichtungsring (7) aufweist, durch den eine im Zylinderraum (13) befindliche Luft komprimiert wird und damit die in Einschubrichtung zum Bodenteil (5) hin bewegte Kolbenstange (3) eine Dämpfung erfährt, **dadurch gekennzeichnet, dass** der Kolben (2) einstückig aus Kunststoff gespritzt ist und dabei einen im Zwei-Komponenten-Spritzverfahren eingebrachten, durch die komprimierte Luft aufwölbbaren Bremskörper (10) enthält, der an der Zylinderwand eine zusätzliche Reibbremswirkung entfaltet.

2. Luftdämpfer nach Anspruch 1, **dadurch gekennzeichnet, dass** der Bremskörper (10) axial auf seinem Umfang eine Kerbe (K) zum definierten Luftdurchlass aufweist.

3. Luftdämpfer nach Anspruch 1, **dadurch gekennzeichnet, dass** der Kolben (2) über eine Rückstellfeder (6) im Zylinderraum (13) im unbelasteten Zustand ausgefahren ist.

4. Luftdämpfer nach Anspruch 1, **dadurch gekennzeichnet, dass** der Zylinder (1) außenseitig Rasthaken (11, 12) zum einfachen Einbau in Beschläge aufweist.

5. Luftdämpfer nach Anspruch 1, **dadurch gekennzeichnet, dass** die Kolbenstange (3) am äußeren Ende einen auswechselbaren Anschlag (8) besitzt.

6. Luftdämpfer nach Anspruch 1, **dadurch gekennzeichnet, dass** der Bremskörper (10) aus einem gummiähnlichen Material, z.B. Silikon gespritzt ist.

7. Luftdämpfer nach Anspruch 1, **dadurch gekennzeichnet, dass** ein Haltering (14) mit dem Dichtring (7) in den Bremskörper (10) eingefügt ist.

8. Luftdämpfer nach Anspruch 1, **dadurch gekennzeichnet, dass** an der Anlagefläche des Dichtrings (7) an dem Kolben (2) oder dem Haltering (14) eine Kerbe für einen definierten Luftdurchlass eingearbeitet ist.

## Claims

1. Air damper comprising a cylinder body (1), wherein a piston (2), which is arranged at the end side of a piston rod (3), is glidingly guided, between a cover (4) closing the cylindrical body and a base part (5) wherein the piston (2), in a groove (9), contains an unidirectionally active sealing ring (7) located in an adjacent position to the wall, by means of which air located in the cylinder chamber (13) is compressed, whereby the piston rod (3) which moves in the direction of insertion toward the base part (5) is dampened, **characterized in that** the piston (2) is injection-molded from plastic in one piece, and contains a braking body (10), which is inserted in a two-component injection method, and which can be domed in shape by the compressed air, and which generates an additional friction braking effect on the cylinder wall.

2. Air damper according to claim 1, **characterized in that** the braking body (10) has an axial incision (K) on its outer surface, for a defined passage of air.

3. Air damper according to claim 1, **characterized in that** in the unloaded state the piston is extended (2) in the cylinder chamber (13) by a resetting spring (6).

4. Air damper according to claim 1, **characterized in that** the cylinder (1) presents catching hooks (11, 12) at the outside, so that it can easily be installed in fittings.

5. Air damper according to claim 1, **characterized in that** the piston rod (3) at its outer end is equipped with an interchangeable stop (8).

6. Air damper according to claim 1, **characterized in that** the braking body (10) is made by injection, from a rubber-like material, e.g. Silicone.

7. Air damper according to claim 1, **characterized in that** a retaining ring (14) is inserted in the braking body (10) together with the sealing ring (7).

8. Air damper according to claim 1, **characterized in that** an incision is formed in the bearing surface of the sealing ring (7) on the piston (2) or on the retaining ring (14).

## Revendications

1. Amortisseur à air comprenant un corps cylindrique (1), dans lequel un piston (2) qui est disposé sur l'extrémité d'une tige de piston (3) est guidé de façon glissant entre un couvercle (4) fermant le corps cylindrique et une partie de base (5), dans lequel le piston (2), dans une rainure (9), comporte un anneau d'étanchéité à action unidirectionnelle (7), situé dans une position adjacente à la paroi, au moyen duquel l'air situé dans la chambre de cylindre (13) est comprimé, ce qui fait que la tige du piston (3) qui se déplace dans la direction d'insertion vers la partie de base (5) est atténuée, **caractérisé en ce que** le piston (2) est moulé par injection de plastique en un seul morceau, et contient un corps de freinage (10), qui y est inséré par une méthode d'injection à deux composants, et qui peut être bombé par de l'air comprimé, et qui apporte un effet supplémentaire de frottement et de freinage sur la paroi du cylindre.

2. Amortisseur à air selon la revendication 1, **caractérisé en ce que** le corps de freinage (10) a une incision axiale (K) dans sa surface extérieure, ce qui permet un passage d'air défini.

3. Amortisseur à air selon la revendication 1, **caractérisé en ce que**, dans l'état non chargé, le piston est étendu (2) dans la chambre de cylindre (13) par l'intermédiaire d'un ressort de rappel (6).

4. Amortisseur à air selon la revendication 1, **caractérisé en ce que** le cylindre (1) présente des crochets d'arrêt (11, 12) à l'extérieur, de sorte qu'il peut facilement être installé dans des ferrures.

5. Amortisseur à air selon la revendication 1, **caractérisé en ce que** la tige du piston (3) sur son extrémité extérieure est équipée d'un arrêt interchangeable (8).

6. Amortisseur à air selon la revendication 1, **caractérisé en ce que** le corps de freinage (10) est fabriqué par injection, d'un matériau ressemblant à du caoutchouc, par exemple de silicone.

7. Amortisseur à air selon la revendication 1, **caractérisé en ce qu'**un anneau de retenue (14) est inséré dans le corps de freinage (10) avec l'anneau d'étanchéité (7).

8. Amortisseur à air selon la revendication 1, **caractérisé en ce qu'**une incision est formée dans la surface d'appui du joint d'étanchéité (7) sur le piston (2) ou sur l'anneau de retenue (14), ce qui permet un passage d'air défini.
